# EUROPÄISCHE PATENTANMELDUNG

(11) **EP 0 693 725 A2**
(43) Veröffentlichungstag der Anmeldung: **24.01.1996**
(21) Anmeldenummer: 95110295.3
(22) Anmeldetag: 30.06.1995
(51) Int. Cl.: G06F 9/46

(54) **Datenverarbeitungsanlage mit Einrichtungen zur Behandlung von Unterbrechungsanforderungen und Prozessaufrufen bei Echtzeitbetrieb**

(30) Priorität: 11.07.1994 DE 4424375
(71) Anmelder: Siemens Nixdorf Informationssysteme AG, D-33106 Paderborn (DE)
(72) Erfinder: Hülters, Hubert, D-83620 Feldkirchen-Westerham (DE)
(74) Vertreter: Fuchs, Franz-Josef, Dr.-Ing.

(57) **Zusammenfassung**

Ausweitung eines Einprozessorsystems mit in Prozeßebenen (PZE...) unterschiedlicher Priorität zusammengefaßten Gruppen von Prozessen für Echtzeitbetrieb zu einem Mehrprozessorsystem mit individuellen Prozessoren (CPU0 bis CPU7) je Prozeßebene (PZE0 bis PZE7) ohne Eingriffe in das vorhandene Betriebssystem für das Einprozessorsystem, indem der Prozessor (CPU0) der höchstprioren Prozeßebene (PZE0) lediglich die Behandlung von Systemfehlern und den Zugriff der einzelnen Prozessoren auf die gemeinsamen Betriebsmittel steuert und die den übrigen Prozeßebenen zugeordneten Prozessoren (CPU1 bis CPU7) durch gemeldete Unterbrechungsanforderungen (PE-INT), Sperr- und Freigabebefehle für unteilbare Befehlsfolgen sowie den Prozessorfreigabebefehl (RLC) nach Beendigung eines Prozesses ausgelöste Systemaufrufe in Unterbrechungsanforderungen (INT.x) an die höchstpriore Prozeßebene (PZE0) umsetzen, die zentral als Koordinierungssteuerung anhand der Ablaufbedingungen für konkurrierende Programmpfade des Einprozessorsystems die Steuerung der Freigabe für die Prozessoren (CPU1 bis CPU7) der übrigen Prozeßebenen (PZE1 bis PZE7) übernimmt.

## Beschreibung

Die Erfindung betrifft eine Datenverarbeitungsanlage mit Einrichtungen zur Behandlung von Unterbrechungsanforderungen und Prozeßaufrufen bei Echtzeitbetrieb entsprechend dem Oberbegriff des Patentanspruches 1.

Derartige Datenverarbeitungsanlagen sind bereits durch die europäischen Patentschriften 0360897-B1 und 0360900-B1 bekannt.Bei Ausstattung der einzelnen Prozeßebenen mit jeweils einem eigenen Prozessor ergeben sich jedoch Probleme, wenn auf gemeinsame Betriebsmittel zuzugreifen ist, um beispielsweise von einer der Prozeßebenen ausgehende Arbeitsaufrufe in das Warteschlangensystem einer anderen Prozeßebene einzutragen oder um Unterbrechungsanforderungen wirksam werden zu lassen, die einen Eingriff in einen anderen gerade ablaufenden Prozeß bedingen. Insbesondere erfordert der Übergang von einem Einzelprozessorsystem zu einem solchen Mehrprozessorsystem zusätzliche Eingriffe in das vorhandene Betriebssystem für das Einprozessorsystem.

Aufgabe der Erfindung ist es daher, eine Datenverarbeitungsanlage der eingangs genannten Art so zu gestalten, daß unter Beibehaltung des vorhandenen Betriebssystems für ein Einprozessorsystem konkurrierende Programmpfade, die durch anfallende Unterbrechungsanforderungen für die einzelnen Prozesse aktiv und beim Einprozessorsystem durch Sperren gegen Unterbrechung vermieden werden, in einfacher Weise koordiniert werden können.

Diese Aufgabe wird durch die kennzeichnenden Merkmale des Patentanspruches 1 gelost. Danach übernimmt der Prozessor der höchstprioren Prozeßebene zentral an Hand der Ablaufbedingungen für konkurrierende Programmpfade des Einprozessorsystems die Steuerung der Freigabe für die Prozessoren der übrigen Prozeßebenen. Für den Prozessor der höchstprioren Prozeßebene entstehen dabei keine konkurrierenden Situationen mit den Prozessoren der übrigen Prozeßebenen. Denn weder die Bearbeitung von Systemfehlern, für die dieser Prozessor zuständig ist und die in der Regel zur bedingungslosen Beendigung des verursachenden Prozesses führen, noch das gewählte Kommunikationsverfahren, mit dem die sich um Freigabe bewerbenden Prozessoren eine Unterbrechungsanforderung stellen und in die Wartestellung übergehen, bis die Freigabe erfolgt, lassen konkurrierende Überschneidungen aufkommen. Die funktionellen Eigenschaften eines Einprozessorsystems können daher trotz der eigenständigen Prozessoren in den einzelnen Prozeßebenen erhalten bleiben, wobei Eingriffe in das vorhandene Betriebssystem in einfacher Weise dadurch vermieden werden können, daß die einen konkurrierenden Zugriff bewirkenden Programmbefehle in Unterbrechungsanforderungen für die höchstpriore Prozeßebene umgesetzt werden, was durch entsprechende Mikroprogramme gesteuert werden kann.

Weiterbildungen der Erfindung beziehen sich auf die Steuerungsabläufe in den einzelnen Prozeßebenen und auf die Steuerungsabläufe in Verbindung mit einer in der höchstprioren Prozeßebene vorgesehenen Koordinierungssteuerung für die an diese Prozeßebene gemeldeten Unterbrechungsanforderungen.

Einzelheiten der Erfindung seien nachfolgend anhand eines in der Zeichnung dargestellten Ausführungsbeispieles näher erläutert.

Im einzelnen zeigen:
- FIG 1: ein Prinzipschaltbild der Erfindung,
- FIG 2: eine funktionsbezogene Einteilung der Prozeßebenen von FIG 1 mit einem Warteschlangensystem für eine der Prozeßebenen,
- FIG 3: die Zusammensetzung der Adresse für das Auffinden einer Warteschlange bei dem in FIG 2 vorgesehenen Warteschlangensystem,
- FIG 4: ein Flußdiagramm für den prinzipiellen Steuerungsablauf in den einzelnen Prozeßebenen von FIG 1,
- FIG 5: ein Flußdiagramm für das mit jeder Unterbrechungsanforderung gestartete Programm zur Ausführung des jeweils aufzurufenden Prozesses,
- FIG 6: eine Zusammenstellung der Steuerdaten für die Koordinierungssteuerung durch die höchstpriore Prozeßebene von FIG 1,
- FIG 7: ein Flußdiagramm für den prinzipiellen Steuerungsablauf der Koordinierungssteuerung,
- FIG 8 bis FIG 10: Flußdiagramme für die den einzelnen Unterbrechungsanforderungen zugeordneten Programmroutinen der Koordinierungssteuerung und
- FIG 11 und FIG 12: Flußdiagramme für zwei Ablaufvarianten zu den Programmroutinen von FIG 10.

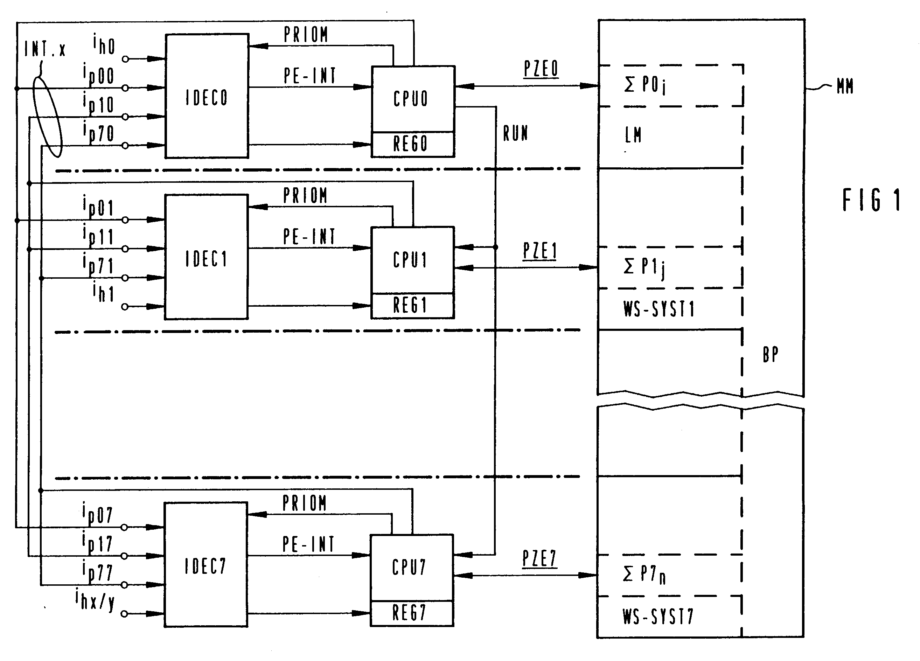

Das Prinzipschaltbild von FIG 1 zeigt eine Datenverarbeitungsanlage, die entsprechend ihrem Aufgabenbereich beispielsweise mit acht Gruppen von Prozessen ΣPOi bis ΣP7ₙ arbeitet, die in Anlehnung an das Ausführungsbeispiel der europäischen Patentschriften 0 360 897-B1 und 0 360 900-B1 verschiedenen Prozeßebenen PZE0 bis PZE7 der Anlage individuell zugeordnet sind. Abweichend davon ist jedoch jeder Prozeßebene PZE... ein eigener Prozessor CPU... als Verarbeitungseinheit zugeordnet. Entsprechend ist auch die bisher einteilige Einrichtung zur Überwachung von Unterbrechungsanforderungen i... des Systems in individuelle Überwachungseinrichtungen IDEC... für jede Prozeßebene PZE... aufgeteilt, die jeweils nur die Prioritätslage der Unterbrechungsanforderungen innerhalb der jeweils zugehörigen Prozeßebene überwachen.

Damit ergibt sich für die gesamte Datenverarbeitungsanlage eine Mehrprozessorsystem-Struktur mit parallel arbeitsfähigen Prozessoren CPU... und mit einem gemeinsamen Speicher MM für die Betriebsprogramme BP und für die Programme der individuellen Gruppen von Prozessen ΣPOi bis ΣP7n der verschiedenen Prozeßebenen PZEO bis PZE7. Außerdem enthält der gemeinsame Speicher MM für jede der Prozeßgruppen ΣP1j bis ΣP7n ein Warteschlangensystem WS-SYST..., in dem jeweils die programmbedingten Arbeitsaufrufe WR für die einzelnen Prozesse, z.B. P1j, der zugehörigen Prozeßebene, z.B. PZE1, zwischengespeichert werden, bis der jeweils zugehörige Prozeß aufgerufen und ausgeführt werden kann. Eine Ausnahme bildet dabei die Prozeßebene PZE0 mit der höchsten Priorität "0", die lediglich die Behandlung von Systemfehlern und in Verbindung mit dem gesonderten Programmteil LM als Koordinierungssteuerung den Zugriff der einzelnen Prozessoren CPU... auf die gemeinsamen Speicherbetriebsmittel, z.B. die Warteschlangensysteme WS-SYST..., steuert, was noch im einzelnen erläutert wird.

Wie bei den aus den genannten europäischen Patentschriften bereits bekannten Anordnungen, werden auch alle Arbeitsaufrufe durch einen Prozeß P... einer der Prozeßebene PZE... an einen Prozeß derselben oder einer anderen Prozeßebene durch eine Unterbrechungsanforderung i... signalisiert, die jeweils von den Einrichtungen IDEC... überwacht werden, wobei neben diesen progammbedingten Unterbrechungsanforderungen i_{p...} auch hardwarebedingte Unterbrechungsanforderungen i_{h...} auftreten können. Allen diesen Anforderungen i... ist dabei in bekannter Weise innerhalb den Einrichtungen IDEC... eine bistabile Kippstufe als Anzeigeelement für das Vorliegen einer Anforderung zugeordnet, die bei Auftreten der Anforderung gesetzt und nach Entgegennahme der Anforderung wieder zurückgesetzt wird.

Mit allen diesen bistabilen Anzeigeelementen ist des weiteren ein Prioritätsnetzwerk gekoppelt, das jeweils die Anforderung mit der höchsten Prioritätseinstufung auswählt. Die Priorität dieser ausgewählten Anforderung wird dann mit der Priorität des in der Prozeßebene jeweils laufenden Prozesses verglichen, und nur wenn die Priorität der ausgewählten Anforderung höher ist, wird von der Einrichtung IDEC... ein die Unterbrechung des laufenden Prozesses herbeiführendes Signal PE-INT ausgelöst und damit die ausgewählte Anforderung zur Behandlung freigegeben.

Die als Vergleichswert dienende Priorität ist also veränderbar und wird für jeden Prozeßlauf mit der Steuerinformation PRIOM zur Einstellung eines z.B. als Maske arbeitenden Registers neu vorgegeben.

Die Einrichtungen IDEC... arbeiten vollkommen unabhängig voneinander und von den Prozessen, wobei mit dem Signal PE-INT für einen höherprioren Prozeß jederzeit eine Unterbrechung eines gerade laufenden niederprioren Prozesses in der jeweiligen Prozeßebene und eine Umschaltung auf den höherprioren Prozeß herbeigeführt werden kann, wenn der niederpriore Prozeß nicht gerade eine unteilbare Befehlsfolge bearbeitet.

Um nach Auslösung eines Signales PE-INT sicherzustellen, welcher Prozeß infolge der Unterbrechungsanforderung aufzurufen ist, ist mit jedem Eingang für eine Anforderung i... ein Register für eine Hinweisadresse gekoppelt, die bei Anforderungen über die Eingange der Gruppe i_{h...} unmittelbar auf den zugehörigen Prozeßkontrollblock und bei programmbedingten Anforderungen über die Eingänge der Gruppe i_{p...} auf das jeweils zugehörige Warteschlangensystem, z.B. WS-SYST4, verweist, in dem der Arbeitsaufruf für den neuen Prozeß hinterlegt ist.

Außerdem ist für jede Prozeßebene PZEO bis PZE7 noch ein Speicher, z.B. einer der Registersatze REGO bis REG7, zur Zwischenspeicherung und Sicherung der für die Fortsetzung eines unterbrochenen Prozesses notwendigen Daten vorgesehen.

Gemäß der Erfindung dient die höchstpriore Prozeßebene PZEO mit dem Prozessor CPUO lediglich zur Behandlung von Systemfehlern und zur Koordination der Unterbrechungsanforderungen INT.x von den Prozessoren CPU1 bis CPU7 in den übrigen Prozeßebenen PZE1 bis PZE7, sowie zur Sicherung der Konsistenz bei der Abarbeitung von unteilbaren Befehlsfolgen durch die einzelnen Verarbeitungseinheiten CPU1 bis CPU7.

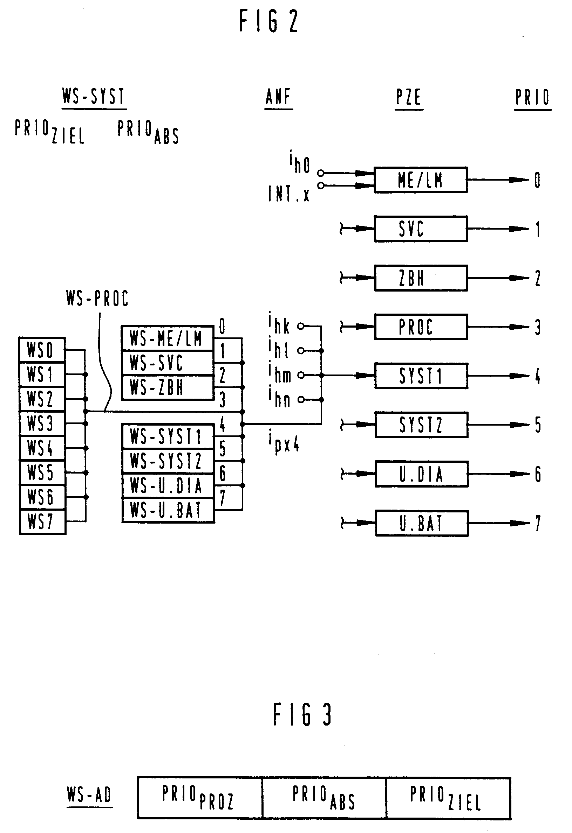

FIG 2 zeigt im rechten Teil die verschiedenen Prozeßebenen PZE mit ihrer jeweiligen Priorität PRIO in der Reihenfolge ihres Prioritätsranges, wobei die höchste Priorität der obersten Prozeßebene PZEO zugeordnet ist, die lediglich durch die Signale INT.x und iₕₒ für Systemfehler als Anforderung ANF aufrufbar ist. Die darunterliegenden Prozeßebenen sind beispielsweise folgenden Funktionen mit Bezug auf ein Datenübertragungssystem zugeordnet:
- SVC:: Ausführung von Supervisoraufgaben
- ZBH:: Bedienung von Leitungspuffern und Zeichenbehandlung
- PROC:: Ausführung von Leitungsprozeduren, z.B. Blockendebehandlung, Nachrichtentransport
- SYST1:: Ausführung von Systemfunktionen
- SYST2:: Ausführung von Systemfunktionen, z.B. Speicherverwaltung und Zuteilung
- U.DIA:: Ausführung von Benutzerfunktionen bei Dialogbetrieb
- U.BAT:: Ausführung von Benutzerfunktionen bei Stapelbetrieb.

Wie sich aus den einzelnen Funktionen ergibt, genießt im Rahmen der Datenübertragung die Bedienung der Leitungspuffer und die Zeichenbehandlung die höchste Priorität, da hierbei die Übertragungsgeschwindigkeit der Zeichen und die zu bedienende Anzahl von Übertragungsleitungen äußerst geringe Reaktionszeiten erfordern. Nicht so zeitkritische Anforderungen sind mit der Ausführung der Leitungsprozeduren verbunden, während demgegenüber die unterstützenden Systemfunktionen, wie Speicherverwaltung für die Nachrichten, Quittungsmeldung usw., die auch in einer einzigen Prozeßebene zusammengefaßt sein können, weniger zeitkritisch und mehr einem Wartesystem zuzurechnen sind. Letzteres gilt dann insbesondere für die mit der Verarbeitung von Benutzeraufträgen verbundene Ausführung von Benutzerfunktionen, wobei der Dialogbetrieb, wie im vorliegenden Fall angenommen, vorrangig vor dem Stapelbetrieb behandelt werden kann.

In jeder dieser Prozeßebenen PZE führen die dieser Prozeßebene zugeordneten Unterbrechungsereignisse iₓₓ nach ihrer Freigabe zu Aufrufen für den jeweils auszuführenden Prozeß. Als Beispiel sind in FIG 2 die auf die Prozeßebene PZE4 zur Ausführung von Systemfunktionen SYST1 bezogenen Unterbrechungsereignisse iₕₖ bis iₕₙ und alle programmbedingten Unterbrechungsereignisse, die hier zum Gruppenereignis iₚₓ₄ zusammengefaßt sind, in der Rangfolge mit fallender Priorität innerhalb der Prozeßebene als Anforderung ANF angegeben, so daß in dieser Prozeßebene zunächst die Einzelanforderungen in der Folge iₕₖ, iₕₗ, iₕₘ und iₕₙ behandelt werden und dann die im Rahmen der Gruppenanforderung iₚₓ₄ vorliegenden programmbedingten Einzelanforderungen, wobei die zugehörigen Arbeitsaufrufe im zugehörigen Warteschlangensystem WS-SYST4 zwischengespeichert sind.

Dieses ebenfalls nur für die Prozeßebene PZE4 zur Ausführung von Systemfunktionen SYST1 dargestellte Warteschlangensystem WS-SYST ist beispielsweise in der Weise ausgebildet, wie es in den europäischen Patenten 0 360 897, 0 360 899 und 0 360 900 ausführlich beschrieben ist. Es besteht demzufolge aus einer der Anzahl der vorhandenen Prozeßebenen PZEO bis PZE7 entsprechenden Anzahl von Warteschlangen WS-...., von denen jeweils eine einer der Prozeßebenen individuell mit gleicher Prioritätseinstufung zugeordnet ist, also z.B. die Warteschlange WS-ZBH mit der Priorität 2 der Prozeßebene PZE2 für die Zeichenbehandlung ZBH.

Arbeitsaufrufe an einen anderen Prozeß werden demzufolge immer in eine Warteschlange des WS-SYST eingegliedert, das der Prozeßebene PZE des aufzurufenden Prozessors zugeordnet ist, wobei die aufnehmende Warteschlange selbst durch die Prozeßebene des den Aufruf veranlassenden Prozesses bestimmt ist.

Das hat zur Folge, daß die jeweils anzusteuernde Warteschlange durch einfache Adressenbildung aus den beiden Prioritätsangaben PRIO_{PROZ} für die empfangende Prozeßebene und PRIO_{ABS} für die den Arbeitsaufruf veranlassende Prozeßebene entsprechend der Konfiguration der Prozesse bestimmbar ist, wie die Darstellung der Warteschlangenadresse WS-AD in FIG 3 zeigt. Außerdem können die Arbeitsaufrufe frei von irgendwelchen, die Bearbeitungsreihenfolge festlegenden Angaben zwischengespeichert werden, da sich ihre Prioritätseinstufung allein aus dem Ort und der Reihenfolge der Zwischenspeicherung im jeweiligen Warteschlangensystem ergibt.

Andererseits werden bei Auftreten und Freigabe einer Gruppenanforderung iₚₓ₄ - ohne zwischenzeitlich auftretende weitere Unterbrechungen - zunächst immer die Arbeitsaufrufe aus der Warteschlange mit der höchsten Prioritätseinstufung bearbeitet, bevor Arbeitsaufrufe aus einer Warteschlange mit niedrigerer Priorität bearbeitet werden. Die dem Anschluß für die Gruppenanforderung iₚₓ₄ zugeordnete Ansteueradresse zeigt daher immer auf den Kopf des zugehörigen Warteschlangensystems.

Stattdessen können die Anschlüsse für die von den übrigen Prozeßebenen ausgehenden programmbedingten Unterbrechungsanforderungen, z.B. i_{pO7} bis iₚ₇₇ an der Überwachungseinrichtung IDEC7 gemäß FIG 1, auch einzeln bewertet werden, wobei immer die prioritätshöchste Anforderung zum Tragen kommt.

Dann wäre jedem Anschluß ein Register mit der Kopfadresse der jeweils zugehörigen Warteschlange zuzuordnen.

Zur weiteren Differenzierung der Arbeitsrangfolge von Arbeitsaufrufen kann, wie in FIG 2 weiterhin für die Warteschlange WS-PROC gezeigt ist, die einzige Warteschlange durch eine Gruppe prioritätsgestaffelter Warteschlangen, z.B. WSO bis WS7, mit den zusätzlichen Prioritäten PRIO_{ZIEL}, z.B. der Stufung 0 bis 7 in fallender Richtung, ersetzt werden. Auf diese Weise können Arbeitsaufrufe von Prozessen derselben Prozeßebene und damit derselben Priorität PRIO_{ABS} bei den auftragsausführenden Prozessen mit unterschiedlicher Priorität PRIO_{ZIEL} bearbeitet werden, wobei diese Priorität vom auftraggebenden Prozeß festgelegt wird. In diesem Fall bildet gemäß FIG 3 die zusätzliche Angabe PRIO_{ZIEL} einen weiteren Adressenteil der die jeweilige Warteschlange bestimmenden Adresse WS-AD. Auch gilt hierfür in gleicher Weise, daß zunächst alle Arbeitsaufrufe aus der Warteschlange mit der jeweils höchsten Prioritätseinstufung weitergeleitet werden, bevor Arbeitsaufrufe aus einer Warteschlange mit niedrigerer Prioritätseinstufung zur Bearbeitung gelangen. Jedoch wird dadurch die absenderbezogene Bearbeitungsreihenfolge für die Arbeitsaufrufe durch die anderen auftraggebenden Prozesse nicht beeinträchtigt, sondern durch die entsprechend der Priorität PRIO_{ZIEL} vorgesehenen Warteschlangen wird lediglich die Bearbeitung innerhalb der zugehörigen Prozeßebene unterteilt.

Das in FIG 2 nur für eine Prozeßebene, nämlich die Prozeßebene SYST1, gezeigte Warteschlangensystem WS-SYST, kann in gleicher Weise für mehrere oder gar alle Prozeßebenen vorgesehen werden, so daß den von der Datenverarbeitungsanlage und im Hinblick auf deren Einsatz gestellten Anforderungen in vielfältiger Weise entsprochen werden kann.

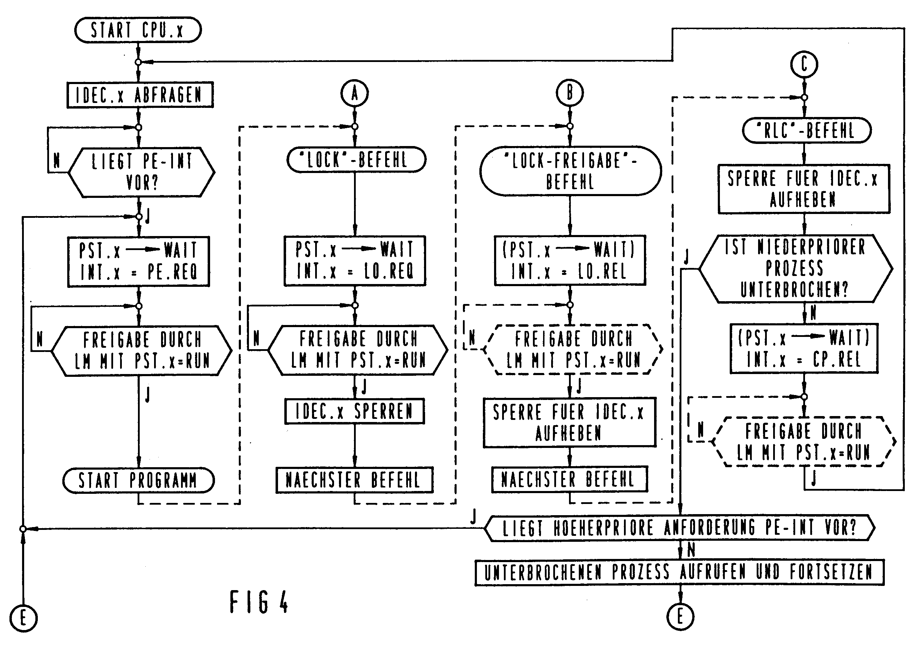

FIG 4 zeigt den sich gemäß der Erfindung ergebenden prinzipiellen Steuerungsablauf für die einzelnen Prozessoren CPU0 bis CPU7 von FIG 1. Nach dem Start befinden sich diese zunächst im Leerlaufzustand IDLE und überprüfen fortlaufend, ob von der zugehörigen Überwachungseinrichtung IDEC.. eine Unterbrechungsanforderung PE-INT gemeldet wird. Liegt eine solche vor, wird in den Wartezustand entsprechend dem Programmstatus PST.x = WAIT umgesteuert und eine Unterbrechungsanforderung INT.x = PE.REQ an die Koordinierungssteuerung der Prozeßebene PZEO gestellt. Der Prozessor CPU.x verbleibt dann solange im Wartezustand, bis ihm mit dem Programmstatus PST.x = RUN die Erlaubnis zur Fortsetzung des Programmlaufs erteilt wird. Im Rahmen dieses Programmlaufs können nun drei Programmbefehle auftauchen, die gemäß der Erfindung ebenfalls zu einer Unterbrechungsanforderung INT.x an die Koordinierungssteuerung der höchstprioren Prozeßebene PZEO führen. Es sind dies folgende Programmbefehle:
a) "LOCK" zur Kennzeichnung des Beginns einer unteilbaren Befehlsfolge
b) "LOCK-FREIGABE" zur Kennzeichnung des Endes einer unteilbaren Befehlsfolge und
c) "RLC" zur Auslösung des Überganges in den Leerlaufzustand IDLE am Ende eines ausgeführten Prozesses.

Dabei führt aber im vorliegenden Fall der Befehl "RLC" nur dann zu einer Unterbrechungsanforderung INT.x = CP.REL, wenn der beendete Prozeß keine Unterbrechung eines niederprioren Prozesses bewirkt hat, der ebenfalls erst zu Ende zu führen ist.

Wie bei einer Anforderung PE-INT wird bei diesen Befehlen ebenfalls der Programmzustand PST.x = WAIT eingenommen und eine die Art der Unterbrechung kennzeichnende Anforderung INT.x = LO.REQ bzw. LO.REL bzw. CP.REL an die Koordinierungssteuerung gerichtet. Dabei ist der Übergang in den Wartezustand beim Befehl "LOCK" unabdingbar, wahrend bei den beiden übrigen Befehlen "LOCK-FREIGABE" und "RLC" darauf verzichtet werden kann, was durch die in Klammern gesetzten Anweisungen (PST.x → WAIT) gekennzeichnet ist. Letzteres ist aber nur möglich, wenn sichergestellt ist, daß die Koordinierungssteuerung Unterbrechungsanforderungen INT.x desselben Prozessors CPU.x in der jeweils gestellten Reihenfolge bearbeitet. Das bedeutet aber einen zusätzlichen Aufwand, so daß es zweckmäßiger ist, auch in diesen Fällen in den Wartezustand überzugehen und auf die Freigabe durch die Koordinierungssteuerung mit PST.x = RUN zu warten.

Im Wartezustand können von den Überwachungseinrichtungen IDEC... keine peripheren Unterbrechungsanforderungen PE-INT gemeldet werden, wahrend im Programmzustand PST.x = RUN Unterbrechungsanforderungen für einen höherprioren Prozeß einen niederprioren Prozeß unterbrechen können. Um diese Unterbrechungsmöglichkeit auszuschließen, wenn mit dem Befehl "LOCK" die Bearbeitung einer unteilbaren Befehlsfolge eingeleitet wird, wird nach der Freigabe durch die Koordinierungssteuerung die Überwachungseinrichtung IDEC.x weiterhin gesperrt und die Sperre erst wieder aufgehoben, wenn der Befehl "LOCK-FREIGABE" beantwortet ist oder der Befehl RLC vorliegt. Die mit PE-INT und den Programmbefehlen "LOCK", "LOCK-FREIGABE" und "RLC" im Betriebssystem für ein Einprozessorsystem vorhandenen Systemaufrufe führen also in einheitlicher Weise zu entsprechenden Unterbrechungsanforderungen INT.x an die Überwachungseinrichtung IDECO der höchstprioren Prozeßebene PZE0. Die Umsetzung kann in einfacher Weise durch einen entsprechenden Mikroprogrammlauf ausgeführt werden.

Wie bereits erwähnt, führt der Befehl "RLC" nur zu einer Unterbrechungsanforderung INT.x, wenn der beendete Prozeß keinen niederprioren Prozeß unterbrochen hat. Ist letzteres aber der Fall, muß der unterbrochene Prozeß ebenfalls erst zu Ende geführt werden. Andererseits kann ein Prozeß jederzeit von einem höherprioren Prozeß unterbrochen werden, wenn nicht gerade eine unteilbare Befehlsfolge bearbeitet wird. Demzufolge wird vor Fortsetzung eines unterbrochenen Prozesses immer erst geprüft, ob nicht eine Anforderung PE-INT für einen höherprioren Prozeß der Prozessorebene vorliegt. Nur wenn letzteres nicht der Fall ist, kann der unterbrochene Prozeß erneut aufgerufen und fortgesetzt werden.

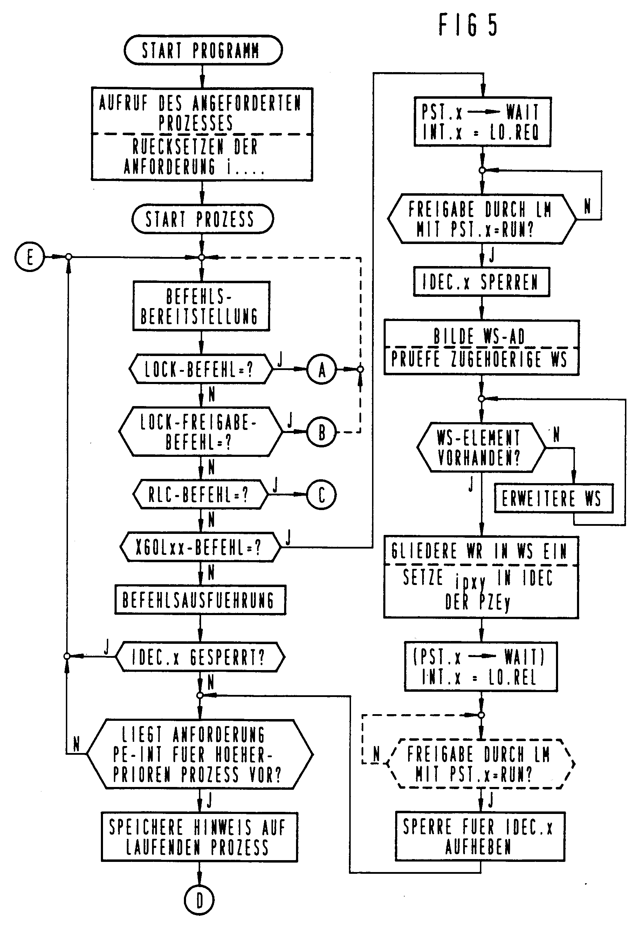

Ergänzend zu der prinzipiellen Ablauffolge gemäß FIG 4 zeigt das Flußdiagramm von FIG 5 den Ablauf des nach jeder wirksam gewordenen Unterbrechungsanforderung PE-INT freigegebenen und gestarteten Programmlaufs. Dieser hat zunächst den Aufruf des angeforderten Prozesses zur Folge, dessen Aufrufdaten bei programmbedingter Unterbrechung in bekannter Weise aus dem Warteschlangensystem WS-SYST entnommen werden. Danach wird die Anforderung i... zurückgesetzt und der aufgerufene Prozeß gestartet. Die Befehle werden dann in der üblichen Weise einzeln nacheinander ausgeführt, wobei nach jeder Befehlsausführung eines nicht zu einer Unterbrechungsanforderung führenden Befehls zunächst geprüft wird, ob die zugehörige Überwachungseinrichtung IDEC.x wegen der Abarbeitung einer unteilbaren Befehlsfolge gesperrt ist. Im Falle der Sperrung wird die eingeleitete Befehlsfolge fortgesetzt und im anderen Falle wird weiterhin geprüft, ob eine Unterbrechungsanforderung PE-INT für einen höherprioren Prozeß vorliegt. Ist dies nicht der Fall, wird der nächste Befehl bearbeitet. Andernfalls wird der laufende Prozeß unterbrochen, und die entsprechenden Daten werden in bekannter Weise gesichert, bis der Prozeß fortgeführt werden kann. Danach wird der Programmlauf über den Verbindungspfad D gemäß FIG 4 fortgesetzt.

Wie aus FIG 5 weiterhin ersichtlich ist, wird bei jeder Befehlsbereitstellung geprüft, ob einer der drei zu einer Unterbrechungsanforderung führenden Befehle "LOCK", "LOCK-FREIGABE" oder "RLC" vorliegt. Bei den ersten beiden Befehlen führt der Weg über den Programmpfad A oder B entsprechend FIG 4 zur Bereitstellung des nächsten Befehles, was in FIG 5 gestrichelt angedeutet ist. Beim Befehl "RLC" wird dagegen der Programmpfad C von FIG 4 eingeleitet. Weiterhin wird überprüft, ob gegebenenfalls ein einen Arbeitsaufruf an einen anderen Prozeß veranlassender Befehl XGOLxx vorliegt, der die Weiterleitung des Arbeitsaufrufes an das WS-SYST der zuständigen Prozeßebene PZE erfordert. Der dadurch bedingte Ablauf ist im rechten Teil von FIG 5 dargestellt.

Um zu verhindern, daß infolge zwischenzeitlich auftretender Unterbrechungsanforderungen der Arbeitsaufruf nicht sicher abgesetzt werden kann, wird die nachfolgende Befehlsfolge als unteilbar behandelt, so daß wie beim Befehl "LOCK" zunächst der Wartezustand entsprechend PST.x → WAIT eingenommen und die Unterbrechungsanforderung INT.x = LO.REQ gestellt wird. Nach der Freigabe mit PST.x = RUN wird dann die zuständige Überwachungseinrichtung IDEC.x weiterhin gesperrt, sowie aus dem XGOL...-Befehl die Priorität PRIO_{PROZ} des aufzurufenden Prozesses ermittelt und in Verbindung mit der Priorität PRIO_{ABS} des Absenderprozesses und gegebenenfalls unter Berücksichtigung der Priorität PRIO_{ZIEL} die Adresse der zuständigen Warteschlange gebildet.

Die so bestimmte Warteschlange wird dann überprüft, ob noch ein zur Zwischenspeicherung des Arbeitsaufrufes dienendes Warteschlangenelement vorhanden ist. Fällt diese Prüfung positiv aus, wird der Arbeitsaufruf in die Warteschlange eingegliedert und als Unterbrechungsereignis i_{p...} bei der Überwachungseinrichtung IDEC... der den zugehörigen Prozeß ausführenden Prozeßebene PZE... angezeigt. Bei negativem Prüfungsergebnis ist die Warteschlange zunächst zu erweitern, z.B. in der Weise, wie es in der bereits genannten europäischen Patentschrift 0 360 900 beschrieben ist, bevor der Arbeitsaufruf eingegliedert werden kann. Danach wird die durch den anfänglichen Befehl "LOCK" ausgelöste Sperre mit der erneuten Unterbrechungsanforderung INT.x = LO.REL an die Koordinierungssteuerung wieder aufgehoben und das Programm wie nach einer Befehlsausführung im linken unteren Teil von FIG 5 fortgesetzt, wobei die Fortsetzung wiederum von der Freigabe mit PST.x = RUN nach vorherigem Übergang in den Wartezustand entsprechend PST.x → WAIT abhängig gemacht werden kann.

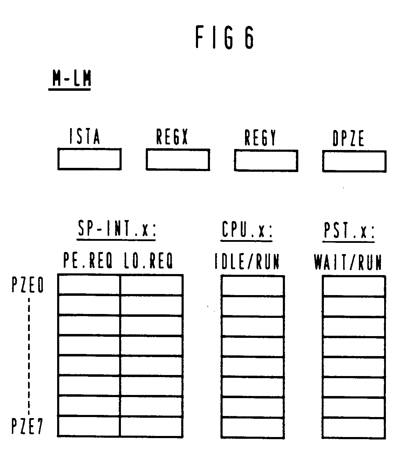

Die Koordination und Serialisierung der an die höchstpriore Prozeßebene PZE0 gerichteten Anforderungen INT.x erfolgt - wie bereits erwähnt - in Verbindung mit dem Programmteil LM als Koordinierungssteuerung. Weiterhin werden dazu einige Steuerdaten und Merker benötigt, die schematisch in FIG 6 zusammengestellt sind und folgende Bedeutung haben:
- ISTA:: Merker, der kennzeichnet, ob eine gemeinsam benutzte Speicherbetriebsmittel erfordernde Unterbrechungsanforderung INT.x mit einer Freigabe entsprechend PST.x = RUN beantwortet werden kann (ISTA = EN) oder nicht (ISTA = DIS)
- REGX, REGY:: Hilfsregister für die Zwischenspeicherung von Prioritätswerten Px während der Prüfung
- DPZE:: Register, das die Prozeßebene PZEx kennzeichnet, für die die Bearbeitung einer unteilbaren Befehlsfolge freigegeben ist.

Außerdem werden für jede der Prozeßebenen PZE0 bis PZE7 jeweils vier Merker benötigt, nämlich je zwei Merker SP-INT.x zur Kennzeichnung von zwar entgegengenommenen, aber noch nicht mit einer Freigabe beantworteten Unterbrechungsanforderungen PE.REQ und LO.REQ, je ein Merker für die Kennzeichnung des Aktivitätszustandes der einzelnen Prozessoren CPU... als im Leerlauf IDLE oder als im Programmlauf RUN befindlich und je ein Merker für die Kennzeichnung des Programmstatus PST.x der einzelnen, sich im Programmlauf RUN befindlichen Prozessoren CPU... als wartend (WAIT) oder laufend (RUN).

Alle Merker können als bistabile Kippstufen ausgebildet und damit zusammen mit den Registern einen Teil der Hardware bilden, wobei die Merker für den Programmstatus PST.x den Laufzustand RUN an die einzelnen Prozessoren CPU... direkt signalisieren.

Andererseits können für alle Merker und Register auch Speicherabschnitte im gemeinsamen Abschnittsspeicher MM verwendet werden, wobei der Programmstatus PST.x = WAIT von der jeweils eine Unterbrechungsanforderung stellenden Prozeßebene PZE... im Rahmen einer Speicheranforderung eingestellt wird, während die Koordinierungssteuerung auf den Programmstatus PST.x = RUN als Freigabe zurückschaltet, wenn der unterbrochene Programmlauf in der zugehörigen Prozeßebene PZE... wieder freigegeben werden kann. Der sich im Wartezustand befindliche Prozessor CPU... der jeweiligen Prozeßebene PZE... muß daher seinen Merker fortlaufend durch eine Speicherabfrage überprüfen.

In analoger Weise könnte auch die Art der jeweiligen Unterbrechungsanforderung INT.x der höchsten Prozeßebene PZE0 mitgeteilt werden. Anstelle von vier verschiedenen Anforderungssignalen für die verschiedenen Arten von Unterbrechungen INT.x = LO.REQ bzw. PE.REQ bzw. LO.REL bzw. CP.REL würde ein von der Überwachungseinheit IDEC0 auszuwertendes Anforderungssignal genügen, wenn die Art der Unterbrechung im Rahmen von Speicheranforderungen in zusätzliche individuelle Speicherabschnitte des gemeinsamen Arbeitsspeichers MM eingeschrieben würde.

Die in all diesen Fällen damit verbundenen Speicherzugriffe sind unkritisch, da sie immer nur auf die eigenen Merker der zugehörigen Prozeßebene PZE... bezogen sind, sie belasten aber das Speichersystem MM zusätzlich.

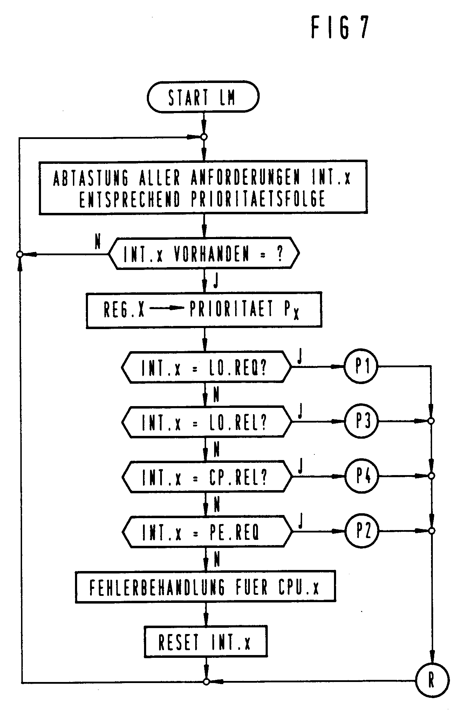

Der durch die Koordinierungssteuerung bedingte Steuerungsablauf ergibt sich aus dem Flußdiagramm von FIG 7. Sobald der Programmteil LM gestartet ist, werden alle Anforderungsquellen entsprechend ihrer Prioritätsfolge überprüft, ob eine Anforderung INT.x von einer der Prozeßebenen PZEx vorliegt. Ist dies der Fall, wird die Priorität Px der ermittelten Prozeßebene PZEx in das Hilfsregister REGX übertragen. Anschließend wird analysiert, welcher Art die Anforderung ist und dann in die entsprechende Routine P1 bis P4 verzweigt, nach deren Ausführung die Abtastung fortgesetzt wird. Ist dagegen die Anforderung nicht eindeutig, wird eine Fehlerbehandlungsroutine für den zugehörigen Prozessor CPUx eingeleitet und die Anforderung zurückgesetzt. Auf diese Weise wird sichergestellt, daß der anfordernde Prozessor seinen eingenommenen Wartezustand WAIT wieder verlassen kann.

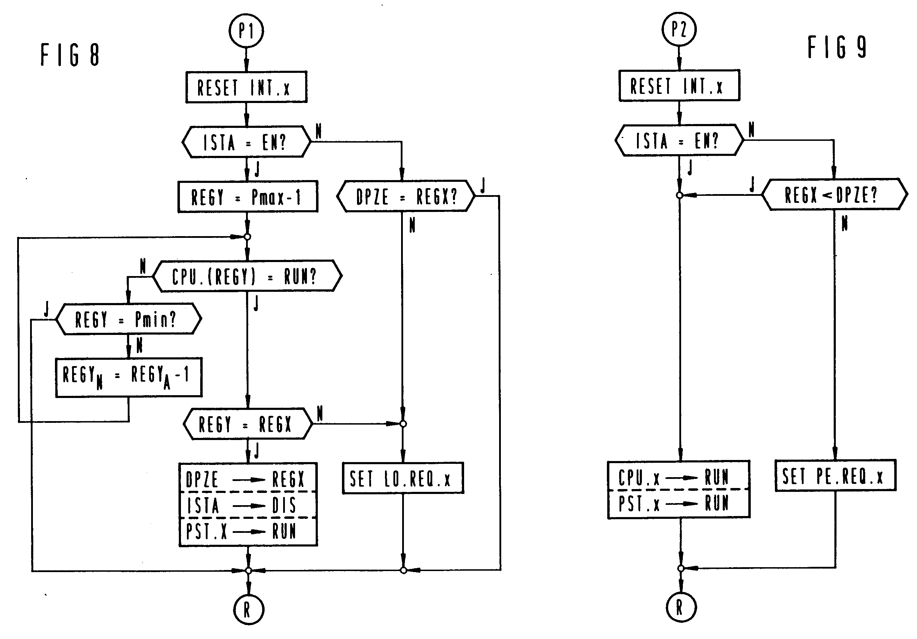

Die sich auf Grund der vier Arten von Unterbrechungsanforderung ergebenden Routinen P1 bis P4 sind mit ihren Abläufen in den Flußdiagrammen von FIG 8 bis FIG 10 dargestellt.

Bei der von der Anforderung INT.x = LO.REQ eingeleiteten Routine P1 wird geprüft, ob die Sperre für die Abarbeitung einer unteilbaren Befehlsfolge zugeteilt werden kann. Als erstes wird in der Überwachungseinrichtung IDEC0 die Anforderung INT.x zurückgesetzt und geprüft, ob bereits eine Sperre vergeben ist. Ist letzteres entsprechend ISTA ≠ EN = DIS der Fall, wird geprüft, ob die im Register REGX zwischengespeicherte Priorität der anfordernden Prozeßebene PZEx gleich der im Register DPZE abgespeicherten Priorität ist, d.h. ob der anfordernden Prozeßebene bereits eine Sperre zugeteilt ist oder nicht. Bei bereits zugeteilter Sperre wird die Überprüfung auf vorliegende Unterbrechungsanforderungen gemäß FIG 7 fortgesetzt. Im anderen Falle wird die Anforderung mit "SET LO.REQx" zunächst im zugehörigen Merker SP-INT.x abgespeichert und die Überprüfung auf das Vorliegen weiterer Anforderungen erst dann fortgesetzt.

Kann dagegen gemäß ISTA = EN eine Sperre zugeteilt werden, wird mit Hilfe des Hilfsregisters REGY geprüft, ob ein Prozessor CPU... mit höherer Priorität entsprechend CPU.(REGY) = RUN aktiv ist, da eine Sperre nur vergeben werden darf, wenn keine höhere Prozeßebene außer der anfordernden aktiv ist, um Kollisionen beim Zugriff auf die gemeinsamen Speicherbereiche im Arbeitsspeicher MM zu vermeiden. Andererseits können niederpriore Prozesse jederzeit von höherprioren unterbrochen werden. Demzufolge wird ausgehend von der Priorität Pmax-1 für die Prozeßebene PZE1 jeder Prozessor in fallender Prioritätsfolge überprüft, bis entsprechend REGY = REGX die Prioritätsstufe der anfordernden Prozeßebene PZEx erreicht ist. Ist einer der überprüften Prozessoren CPU... aktiv, wird entsprechend REGY = REGX geprüft, ob dieser mit dem anfordernden Prozessor identisch ist. Trifft dies nicht zu, wird die Anforderung entsprechend "SET LO.REQ" ebenfalls abgespeichert. Im anderen Falle wird das Register DPZE mit der Priorität der anfordernden Prozeßebene PZEx aus dem Register REGX geladen. Außerdem wird der Merker ISTA auf DIS gesetzt und entsprechend PST.x → RUN die Anforderung mit der Freigabe beantwortet, so daß der anfordernde Prozessor CPU.x seinen Wartezustand aufheben und das Programm fortsetzen kann. Der Programmteil LM setzt dann die Abtastung nach Vorliegen weiterer Anforderungen fort.

Beim Flußdiagramm nach FIG 9 wird mit der Routine P2 eine Anforderung INT.x = PE.REQ bearbeitet. Auch in diesem Falle wird die Anforderung mit RES INT.x zunächst zurückgesetzt und dann geprüft, ob der Merker ISTA im Zustand EN ist, da nur dann die Anforderung bedient werden kann, indem der Prozessor entsprechend CPU.x → RUN als aktiv gekennzeichnet und der Programmlauf mit PST.x → RUN freigegeben wird. Andernfalls kann die Anforderung nur dann bedient werden, wenn diese entsprechend REGx < DPZE niederpriorer ist, als die im Register DPZE vermerkte Priorität. Auf diese Weise können auch niederpriore Prozeßebenen ihren Programmlauf gemäß FIG 4 aufnehmen, was die Parallelarbeit fördert, ohne daß es zu Kollisionen kommen kann, weil - wie anhand von FIG 4 und FIG 5 bereits beschrieben - ein niederpriorer Programmlauf jederzeit durch einen höherprioren Programmlauf unterbrochen werden kann.

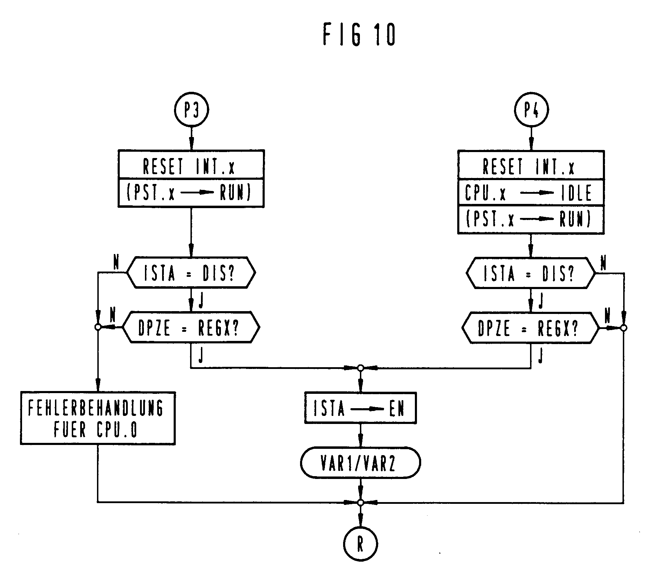

Die in FIG 10 gezeigten Routinen P3 und P4 beziehen sich auf die Beendigung einer erhaltenen Sperre mit INT.x = LO.REL und auf die Beendigung des aktiven Programmlaufs eines Prozessors CPU.x mit INT.x = CP.REL. Beide Routinen unterscheiden sich einmal dadurch, daß im letzteren Fall zusätzlich der Merker für den Aktivitätszustand des Prozessors CPU.x auf IDLE gesetzt wird. In beiden Routinen wird außerdem die Anforderung INT.x zurückgesetzt und für den Fall, daß die Prozessoren CPU... auch bei diesen beiden Unterbrechungsanforderungen in den Wartezustand WAIT übergehen, der Programmstatus entsprechend PST.x → RUN geändert. Wie bereits erwähnt, ist aber hierbei ein Übergang in den Wartezustand nicht erforderlich, weshalb die entsprechenden Anweisungen wiederum in Klammern gesetzt sind.

Zum anderen besteht ein Unterschied darin, daß bei Beendigung einer Sperre gemäß der Routine P3 der Merker ISTA im Zustand DIS und die im Register DPZE abgespeicherte Priorität gleich der im Register REGX zwischengespeicherten Priorität des anfordernden Prozessors CPU.x bzw. der zugehörigen Prozeßebene PZEx sein muß. Ist dieses nicht der Fall, dann liegt ein Fehler vor, was zur Überleitung in eine Fehlerbehandlung für den steuernden Prozessor CPU0 führt.

Bei Beendigung des aktiven Programmlaufs gemäß der Routine P4 werden diese Bedingungen zwar gleichfalls überprüft, sie führen aber bei Nichteinhaltung beider Bedingungen nicht zu einer Fehlerbehandlung, da keine Sperre vergeben sein muß. Selbst wenn eine solche vergeben sein sollte, ist diese in der Regel nicht an den anfordernden Prozessor CPU.x vergeben. Ist dagegen eine Sperre an den anfordernden Prozessor CPUx vergeben, so bedeutet die Beendigung des aktiven Programmlaufs zugleich die Aufhebung einer Sperre, so daß der weitere Ablauf beider Routinen der gleiche ist, wobei als erstes der Merker ISTA wieder auf EN eingestellt wird.

Der weitere Ablauf beider Routinen P3 und P4 kann dann in einer von zwei verschiedenen Varianten VAR1 und VAR2 erfolgen. Welche davon zum Tragen kommt, hängt vom jeweiligen Einsatzfall des Systems ab, nämlich davon, ob die Annahme peripherer Unterbrechungsanforderungen PE-INT innerhalb eines vorgegebenen Zeitraumes zu erfolgen hat oder nicht.

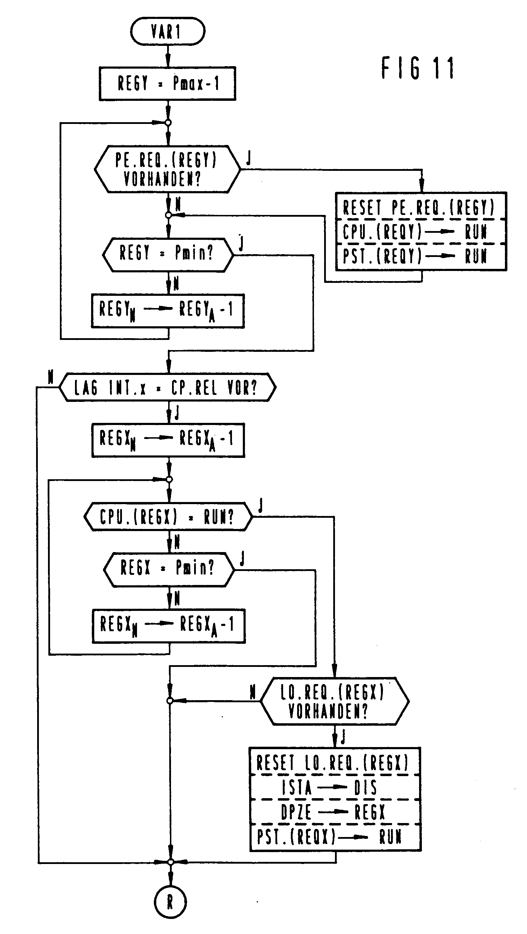

Die in FIG 11 gezeigte Variante VAR1 bezieht sich auf eine zeitliche begrenzte Annahmedauer. In diesem Falle ist es zweckmäßig, daß gemeldete und abgespeicherte Unterbrechungsanforderungen PE.REQ von der Koordinierungssteuerung vor den gespeicherten Anforderungen für eine Sperre LO.REQ behandelt werden.

Das Register REGY steuert in diesem Falle die Überprüfung der Merker SP-INT.x von FIG 6 für die gespeicherten peripheren Anforderungen PE.REQ entsprechend ihrer Prioritätsrangfolge, ausgehend von der zweithöchsten Priorität Pmax-1=1 bis zur niedrigsten Pmin=7. Wird dabei eine Anforderung gefunden, wird die gespeicherte Anforderung PE.REQ.(REGY) gelöscht und mit Einstellung der Merker CPU.(REGY) und PST.(REGY) auf RUN die Anforderung beantwortet. Nachfolgend wird geprüft, ob weitere gespeicherte Anforderungen PE.REQ vorliegen, indem der Prioritätswert im Register REGY schrittweise geändert wird, bis der Wert Pmin erreicht ist. Danach wird auf die Überprüfung der Merker SP-INT.x für gespeicherte Sperrenanforderungen LO.REQ umgesteuert.

Liegt überhaupt keine gespeicherte Anforderung PE.REQ vor, wird sofort auf die Überprüfung von gespeicherten Sperranforderungen umgesteuert.

Die weitere Prüfung ist von der Art der den Programmlauf gemäß FIG 4 auslösenden ursprünglichen Unterbrechungsanforderung abhängig. Handelt es sich dabei um eine Anforderung INT.x = LO.REL zur Freigabe einer Sperre, dann ist der die Anforderung stellende Prozessor CPU.x gemäß CPU.x = RUN aktiv, so daß voraussetzungsgemäß keine Sperre an eine Prozeßebene mit niedrigerer Priorität vergeben werden kann. Auch kann voraussetzungsgemäß keine Sperranforderung einer höherprioren Prozeßebene gespeichert vorliegen. Der Programmlauf der Variante VAR1 ist damit beendet.

Wurde der Programmlauf dagegen von einer Unterbrechungsanforderung INT.x = CP.REL ausgelöst, dann befinden sich der auslösende Prozessor CPU.x gemäß CPU.x = IDLE und voraussetzungsgemäß auch die Prozessoren der höherprioren Prozeßebenen im Leerlaufzustand. Ausgangspunkt der Prüfung ist daher in diesem Falle die Prozeßebene mit nächstniedrigerer Priorität, so daß der noch im Register REGX enthaltene Prioritätswert der ursprünglichen Anforderung als Ausgangspunkt für die Ansteuerung der Prozeßebene mit der nächstniedrigeren Priorität dient.

Analog der Programmroutine P1 wird dann geprüft, ob der Prozessor der überprüften Prozeßebene entsprechend CPU.(REGX) = RUN aktiv ist. Ist dies nicht der Fall, werden die weiteren niederprioren Prozeßebenen überprüft, bis im Register REGX der Wert Pmin erreicht wird und in den Programmablauf von FIG 7 zurückgesprungen werden kann. Wird dagegen ein aktiver Prozessor CPU.(REGX) gefunden und liegt von diesem eine gespeicherte Sperranforderung LO.REQ.(REGX) vor, dann wird diese zurückgesetzt, der Merker ISTA auf DIS gesetzt und die Priorität aus dem Register REGX ins Register DPZE eingetragen. Außerdem erfolgt entsprechend PST.(REGX) → RUN die Freigabe. Weitere Sperren dürfen dann voraussetzungsgemäß nicht mehr vergeben werden, so daß die Routinen P3 bzw. P4 ebenfalls enden.

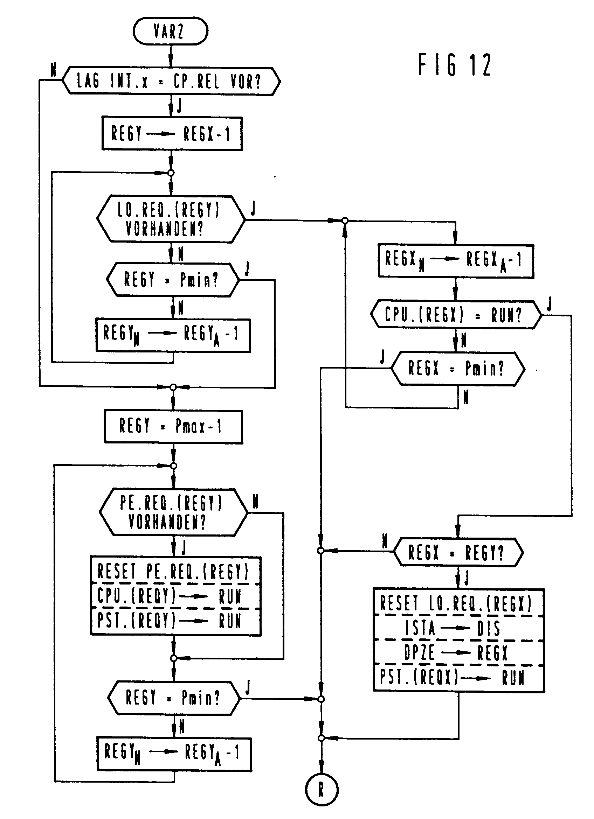

Die andere Variante VAR2 gemäß FIG 12 ist dann zweckmäßig, wenn weniger strenge Realzeitanforderungen zu erfüllen sind und daher gespeicherte Sperranforderungen INT.x = LO.REQ bevorzugt bearbeitet werden können. Die Prozessoren können sich dann in höherem Maße der Abarbeitung von Aufträgen widmen, so daß Engpässe bei der Betriebsmittelbereitstellung vermieden werden. In diesem Falle ist aber eine Überprüfung der in den Merkern SP-INT.x gespeicherten Sperranforderungen LO.REQ nur notwendig, wenn die Variante von der Routine P4 angesteuert wird. Denn nur dann sind voraussetzungsgemäß der den Programmlauf auslösende Prozessor CPU.x und auch alle höherprioren Prozessoren im Leerlaufzustand IDLE und damit inaktiv, so daß eine der gespeicherten Sperranforderungen LO.REQ bedient werden kann.

Im anderen Falle, nämlich bei Ansteuerung im Rahmen der Routine P3, befinden sich zwar alle höherprioren Prozessoren als der auslösende Prozessor CPU.x im Leerlaufzustand IDLE, nicht aber der auslösende Prozessor selbst, so daß keine Sperren an niederpriore Prozessoren vergeben werden können. Die höherprioren, sich im Leerlaufzustand befindlichen Prozessoren können lediglich periphere Anforderungen PE-INT entgegennehmen und weiterleiten.

Zu Beginn der Variante VAR2 wird daher zunächst geprüft, ob als Auslöser eine Anforderung INT.x = CP.REL vorlag. Ist dies der Fall, wird das die Überprüfung steuernde Register REGY wiederum mit der aus dem Register REGX abgeleiteten Priorität für die nächstniedrigere Prozeßebene geladen, und es werden damit beginnend alle Merker SP-INT.x für die entsprechenden Prozeßebenen bis zur Prozeßebene mit der Priorität Pmin nacheinander überprüft, ob eine Anforderung LO.REQ gespeichert ist.

Wird eine Anforderung gefunden, wird gemäß dem rechten Ablaufzweig ausgehend vom Wert der im Register REGX noch gespeicherten Priorität der Wert für die nächstniedrigere Priorität ermittelt. Anhand des Registers REGX werden dann in bereits beschriebener Weise die zugehörigen Prozessoren entsprechend CPU.(REGX) = RUN auf ihren Aktivitätszustand überprüft. Wird dabei bis zum Erreichen der im Register REGY hinterlegten Priorität der gefundenen Sperranforderung nur der Prozessor als aktiv gefunden, der dieser Priorität entspricht, kann die Anforderung beantwortet werden. Die gespeicherte Anforderung wird wiederum zurückgesetzt und der Merker ISTA auf DIS eingestellt. Die Priorität aus dem Register REGX wird an das Register DPZE übergeben und schließlich entsprechend PST.(REGx) → RUN die Freigabe wirksam.

Die Routine P4 ist damit beendet. Das gleiche gilt, wenn fälschlicherweise kein aktiver Prozessor gefunden wird, und außerdem dann, wenn zwar ein aktiver Prozessor bei der Überprüfung gefunden wird, dieser aber einer abweichenden Prioritätsebene angehört.

Für den Fall, daß keine gespeicherte Anforderung LO.REQ gefunden oder aber die Variante VAR2 im Rahmen der Routine P3 angesteuert wird, wird die Überprüfung der gespeicherten Anforderungen PE.REQ eingeleitet, die wiederum vom Register REGY gesteuert wird, das mit dem Wert der Priorität Pmax-1 für die zweithöchste Prozeßebene PZE1 geladen wird. Nacheinander werden wiederum alle entsprechenden Merker SP-INT.x überprüft. Wird dabei eine gespeicherte Anforderung PE.REQ gefunden, wird diese zurückgesetzt und dem zugehörigen Prozessor mit CPU.(REGY) → RUN und PST.(REGY) → RUN die Erlaubnis zur Aufnahme des Programmlaufs gemäß FIG 5 erteilt.

## Patentansprüche

1. Datenverarbeitungsanlage mit Einrichtungen zur Behandlung von Unterbrechungsanforderungen und Prozeßaufrufen bei Echtzeitbetrieb, wobei die aufrufbaren Prozesse (P0i bis P7n) entsprechend ihrer durch die einzuhaltenden Realzeitbedingungen vorgegebenen Priorität unterschiedlichen, nach Prioritäten gestaffelten Prozeßebenen (PZE0 bis PZE7) zugeordnet sind und jede Prozeßebene (z.B. PZE7) einen Prozessor (CPU7), Mittel (IDEC7) zur Überwachung und Bewertung der Prioritätseinstufung von an diese Prozeßebene gerichteten Unterbrechungsanforderungen (i_{pxy}, i_{hxy}) sowie Mittel (WS-SYST7) zur Entgegennahme von programmbedingte Unterbrechungsanforderungen (i_{pxy}) auslösenden Arbeitsaufrufen (WR) der anderen Prozeßebenen (z.B. PZE0 bis PZE6) aufweist,
**dadurch gekennzeichnet,**
daß unter Beibehaltung des einem Einprozessorsystem entsprechenden Betriebssystems, das von den einzelnen Prozessoren (CPU...) nach Bedarf genutzt wird, der der Prozeßebene (PZE0) der höchsten Priorität zugeordnete Prozessor (CPU0) lediglich die Behandlung von Systemfehlern (ME) des von den Prozessoren gebildeten Mehrprozessorsystems und den Zugriff der einzelnen Prozessoren (CPU...) auf die gemeinsamen Betriebsmittel steuert und
daß die den übrigen Prozeßebenen (PZE1 bis PZE7) zugeordneten Prozessoren (CPU1 bis CPU7) die von der jeweils zugehörigen Überwachungseinrichtung (IDEC...) gemeldeten Unterbrechungsanforderungen (PE-INT), die bei Programmläufen auftretenden Sperr- und Freigabebefehle zur Sicherung von unteilbaren Befehlsfolgen sowie den Befehl (RLC) zur Überleitung in den Leerlaufzustand (IDLE) am Ende eines Prozesses jeweils in Unterbrechungsanforderungen (INT.x) an die höchstpriore Prozeßebene (PZE0) umsetzen und gemeldete Unterbrechungsanforderungen (PE-INT) und unteilbare Befehlsfolgen (Befehl "LOCK") erst bearbeiten, wenn vom Prozessor (CPU0) der höchstprioren Prozeßebene (PZE0) die entsprechende Freigabe (PST.x = RUN) erfolgt ist.

2. Datenverarbeitungsanlage nach Anspruch 1, **dadurch gekennzeichnet,** daß die Prozessoren (CPU1 bis CPU7) mit jeder an die höchstpriore Prozeßebene (PZE0) gemeldeten Unterbrechungsanforderung (INT.x) vorübergehend in den Wartezustand (WAIT) übergehen, bis die Freigaberückmeldung (RUN) erfolgt.

3. Datenverarbeitungsanlage nach Anspruch 1 oder 2, **dadurch gekennzeichnet,** daß die Umsetzung der eine Unterbrechungsanforderung (INT.x) an die höchstpriore Prozeßebene (PZE0) auslösenden Unterbrechungsanforderungen (PE-INT) und Befehle (LOCK, LOCK-FREIGABE, RLC) und die Auslösung der damit verbundenen Steuerungsmaßnahmen durch gesonderte Mikroprogramme erfolgt.

4. Datenverarbeitungsanlage nach einem der Ansprüche 1 bis 3, **dadurch gekennzeichnet,** daß der Befehl (RLC) zur Überleitung in den Leerlaufzustand nur wirksam wird, wenn der beendete Prozeß nicht durch einen höherprioren Prozeß unterbrochen war.

5. Datenverarbeitungsanlage nach einem der Ansprüche 1 bis 4, **dadurch gekennzeichnet,** daß nach einem eine unteilbare Befehlsfolge einleitenden Sperrbefehl (LOCK) die zugehörige Überwachungseinrichtung (IDEC...) für periphere Unterbrechungsanforderungen (i...) gesperrt wird, bis die unteilbare Befehlsfolge mit dem Freigabebefehl (LOCK-FREIGABE) beendet wird.

6. Datenverarbeitungsanlage nach Anspruch 5, **dadurch gekennzeichnet,** daß bei einem einen Arbeitsaufruf für einen anderen Prozeß veranlassenden Befehl (XGOL...) des jeweils laufenden Prozesses die dadurch ausgelöste Programmroutine als unteilbare Befehlsfolge behandelt wird, die entsprechend einem Sperrbefehl mit einer Unterbrechungsanforderung (INT.x = LO.REQ) an die höchste Prozeßebene (PZEO) eröffnet und entsprechend einem Freigabebefehl mit einer weiteren Unterbrechungsanforderung (INT.x = LO.REL) beendet wird.

7. Datenverarbeitungsanlage nach einem der Ansprüche 1 bis 6, **dadurch gekennzeichnet,** daß für die verschiedenen Unterbrechungsanforderungen (INT.x = PE.REQ bzw. LO.REQ bzw. LO.REL bzw. CP.REL) der einzelnen Prozessoren (CPU1 bis CPU7) an die Überwachungseinrichtung (IDECO) der höchstprioren Prozeßebene (PZE0) individuelle Signalleitungen verwendet werden.

8. Datenverarbeitungsanlage nach einem der Ansprüche 1 bis 6, **dadurch gekennzeichnet,**
daß für die verschiedenen Unterbrechungsanforderungen (INT.x = PE.REQ bzw. LO.REQ bzw. LO.REL bzw. CP.REL) der einzelnen Prozessoren (CPU1 bis CPU7)an die Überwachungseinrichtung (IDECO) der höchstprioren Prozeßebene (PZEO) eine gemeinsame Signalleitung verwendet wird, und daß die Art der jeweiligen Unterbrechungsanforderung vom jeweiligen Prozessor (CPU.x) im Rahmen eines Speicherzugriffes in individuelle Speicherabschnitte des gemeinsamen Arbeitsspeichers (MM) eingetragen wird, die von der Koordinierungssteuerung (LM) der höchstprioren Prozeßebene (PZE0) nach Meldung einer Unterbrechungsanforderung (INT.x) durch die zugehörige Überwachungseinrichtung (IDECO) abgefragt werden.

9. Datenverarbeitungsanlage nach einem der Ansprüche 1 bis 8, **dadurch gekennzeichnet,**
- daß die in der höchstprioren Prozeßebene (PZEO) vorgesehene Koordinierungssteuerung die von der zugehörigen Überwachungseinrichtung (IDECO) gemeldeten Unterbrechungsanforderungen (INT.x) entsprechend ihrer Prioritätsfolge fortlaufend überwacht und bei Vorliegen einer Unterbrechungsanforderung (INT.x) die der Art der jeweiligen Anforderung entsprechende Programmroutine (P1 bis P4) ausführt,
- daß der Ablauf innerhalb der einzelnen Programmroutinen von in der Koordinierungssteuerung geführten prozessorindividuellen Angaben (CPU.x:IDLE/RUN) über den jeweiligen Aktivitätszustand und Angaben (PST.x:WAIT/RUN) über den Programmstatus der jeweils aktiven Prozessoren (CPU.x) sowie von zwei weiteren Steuergrößen abhängig ist, von denen die eine (ISTA) anzeigt, ob eine gemeinsam genutzte Speicherbetriebsmittel erfordernde Unterbrechungsanforderung (INT.x = LO.REQ) mit einer Freigabe (PST.x = RUN) beantwortet werden kann (ISTA=EN) oder nicht (ISTA=DIS), und von denen die andere (DPZE) jeweils die Prozeßebene (PZE...) kennzeichnet, für die die Bearbeitung einer unteilbaren Befehlsfolge freigegeben ist, und
- daß eine Sperranforderung (INT.x = LO.REQ) nur dann mit einer Freigabe beantwortet wird, wenn kein Prozessor (CPU...) einer höherprioren Prozeßebene als der anfordernde aktiv ist.

10. Datenverarbeitungsanlage nach Anspruch 9, **dadurch gekennzeichnet,** daß von der Überwachungseinrichtung (IDECO) der höchstprioren Prozeßebene (PZEO) ermittelte und auf Anforderungen zur Unterbrechungsbehandlung (PE-INT) oder auf Sperrbefehle (LOCK) zurückgehende Unterbrechungsanforderungen (INT.x = PE.REQ oder LO.REQ) in prozessorindividuellen Merkern (SP-INT.x = PE.REQ/LO.REQ) gespeichert werden, wenn sie nicht unmittelbar mit einer Freigabe (PST.x = RUN) beantwortet werden können, weil bereits eine Sperre vergeben ist und es sich im Falle einer auf eine Anforderung zur Unterbrechungsbehandlung (PE-INT) zurückgehenden Unterbrechungsanforderung (INT.x = PE.REQ) außerdem um die eines Prozessors einer Prozeßebene handelt, die höherpriorer ist als die, für die die Sperre vergeben ist.

11. Datenverarbeitungsanlage nach Anspruch 10, **dadurch gekennzeichnet,** daß bei auf Freigabebefehle (LOCK-FREIGABE) oder Befehle (RLC) zur Überleitung in den Leerlaufzustand zurückgehenden Unterbrechungsanforderungen (INT.x = LO.REL oder CP.REL) und einer für die anfordernde Prozeßebene bereits vergebenen Sperre (ISTA=DIS) die prozessorindividuellen Merker (SP-INT.x:) auf gespeichert vorliegende Anforderungen überprüft werden, wobei gespeicherte Sperranforderungen (LO.REQ) nur geprüft werden, wenn die Programmroutine durch einen Befehl (RLC) zur Überleitung in den Leerlaufzustand ausgelöst worden ist.

12. Datenverarbeitungsanlage nach Anspruch 11, **dadurch gekennzeichnet,** daß bei der Überprüfung der gespeicherten Anforderungen zunächst die auf Anforderungen (PE-INT) zur Unterbrechungsbehandlung zurückgehenden Unterbrechungsanforderungen (INT.x = PE.REQ) berücksichtigt werden, indem ausgehend von der zweithöchsten Prozeßebene (PZE1) alle Merker (SP-INT.x = PE.REQ) der Reihe nach überprüft werden und vorliegende Anforderungen mit einer Freigabe (PST.x = RUN) beantwortet werden, während eine möglicherweise beantwortbare gespeicherte Sperranforderung (SP-INT.x = LO.REQ) erst danach beantwortet wird.

13. Datenverarbeitungsanlage nach Anspruch 11, **dadurch gekennzeichnet,** daß eine Überprüfung der auf Anforderungen (PE-INT) zur Unterbrechungsbehandlung zurückgehenden gespeicherten Unterbrechungsanforderungen (INT.x = PE.REQ) nur erfolgt, wenn vorher keine beantwortbare gespeicherte Sperranforderung (SP-INT.x = LO.REQ) gefunden wurde.
